# EUROPEAN PATENT SPECIFICATION

(11) **EP 3 964 342 B1**
(45) Date of publication and mention of the grant of the patent: **22.02.2023**
(21) Application number: 21181250.8
(22) Date of filing: 23.06.2021
(51) Int. Cl.: B29C 33/00, B29C 45/26, B29C 45/16

(54) **METHOD FOR MOLDING LAYERED MANUFACTURED ARTICLES MADE OF POLYMERIC MATERIAL AND RELATED MOLDING KIT**
VERFAHREN ZUM FORMEN VON GESCHICHTETEN FERTIGARTIKELN AUS POLYMEREM MATERIAL UND ZUGEHÖRIGER FORMSATZ
PROCÉDÉ DE MOULAGE D'ARTICLES MANUFACTURÉS EN COUCHES EN MATÉRIAU POLYMÈRE ET KIT DE MOULAGE ASSOCIÉ

(30) Priority: 08.09.2020 IT 202000021172
(43) Date of publication of application: 09.03.2022
(73) Proprietor: DA. MA. & Co S.r.l., 63812 Montegranaro FM (IT)
(72) Inventor: MAZZA, Emanuele, 63812 Montegranaro FM (IT); MAZZA, Dario, 63812 Montegranaro FM (IT)
(74) Representative: Modiano, Micaela Nadia

(56) References cited:
- EP-A1- 2 520 422
- EP-A1- 3 057 784
- WO-A2-2010/045144

## Description

The present invention relates to a method for molding layered manufactured articles made of polymeric material, in particular soles for shoes made of expanded polymeric material and other products with similar characteristics. The present invention also relates to a specific molding kit (comprising male mold parts, female mold parts and related accessories) adapted to molding layered manufactured articles made of expanded polymeric material.

Among the expandable polymers (which therefore are subject to respective cross-linking) that can be used for molding operations are polyolefins and, in particular, ethylene vinyl acetate (EVA) which is particularly suitable for providing manufactured articles such as soles for shoes and the like.

The traditionally known method for providing single-colored manufactured articles made of EVA by injection entails the use of a mold made up of 2 parts: an upper mold part (male mold part), and a lower mold part (female mold part); by closing, these mold parts, which are mutually complementary, form the reduced image of the manufactured article, which will be filled with the corresponding mass of polymer that will form the manufactured article, which is introduced by injection through a special channel provided on the 2 parts of the male mold part (injection channel).

The traditional method entails the initial heating of the polymeric raw material for the corresponding transition from the solid state (generally the polymers are supplied in granule form) to the viscous (semi-liquid) state, according to standards imposed by the type of polymer used.

Subsequently, by way of a process of injection, the semi-fluid preparation (plasticized EVA) is introduced into the injection channel and, with pressures determined by the mass of the manufactured article that it is intended to produce (soles, slippers, bumpers, technical articles etc.), the mold described previously is filled. The mold must be heated beforehand to high temperatures (between 180°C and 200°C), and these temperatures too are predetermined by the injected mass and by the volumes of the shapes of the manufactured article; the mold must also be put under vacuum conditions, i.e. all the air present in the cavity defined inside it after it is closed must be extracted.

Then the polymer is solidified (when the cross-linking takes place), which occurs by virtue of the high temperatures imposed inside the mold, according to times and ways that are determined by the shapes of the manufactured article and by its associated image. More precisely, the exact amount of mass of semi-fluid EVA (or other polymer) that is injected into the mold solidifies (cross-links) in different time, which is substantially proportional to the volumes given by the various parts in which the image is formed in the mold that the injected mass occupies in order to obtain the manufactured article that it is desired to produce. In practice, for the same temperature of the mold, large masses of material and thick volumes require a longer time for cross-linking, while small masses and smaller volumes cross-link in a much shorter time. Therefore it is established that the time necessary for the complete cross-linking of the manufactured article made of EVA, determined by the heat transmitted by thermal conduction from the wall of the image of the mold to the material, is directly proportional to the mass of the material itself that filled that image.

In the step of cross-linking, owing to the high temperatures that the material encounters in the mold, the blowing agents present in the mixture of EVA (or other polymer) cross the "point of initial expansion", and therefore they chemically react and release gases, and they trigger the reaction that will cause the manufactured article to expand after the mold is opened. At the end of this step, the pressures reached in the image of the mold are very high, while the temperatures of the injected EVA material have been rendered substantially uniform with those of the mold.

Then the mold is opened, and this is followed by an immediate expansion of the product that exits from the image that accommodated the mass that was injected beforehand. The sharp increase in volume determined by the blowing agents present in the mass of polymeric material brings the molded product, now completely cross-linked (solidified), to dimensions that are actually larger than the final dimensions of the end product itself, once it has cooled. Immediately afterward, the molded manufactured article is extracted from the hot mold and immediately begins its reduction in volume determined by cooling, until it reaches the final dimensions, which are identical in shape to the image of the mold, but proportionally larger than the volumes of these dimensions, by virtue of the expansion that has taken place.

The operator then proceeds to clean the mold to remove any residues left by gases and by inert material and spreads release agents on the surface of the image in order to proceed with a new production cycle.

For the molding of layered (for example two-color) manufactured articles made of EVA (or another polymer with similar characteristics), the method described previously is substantially combined with the conventional method for two-layer and two-color molding adopted with different raw materials (such as for example materials like rubber).

This method of molding entails the use of a mold composed of three parts: an upper mold part (male mold part), a lower mold part (female mold part), which are mutually complementary, and an intermediate plate (intermediate insert) the upper and lower side of which are shaped in such a way as to correspond respectively with the male mold part and with the female mold part.

This method entails closing the above mentioned molding assembly so that the male mold part is juxtaposed against the upper face of the intermediate insert and the female mold part is juxtaposed against the lower face of the intermediate insert.

In this molding technique, material venting channels are provided around the image of the male mold part and of the female mold part, in order to facilitate the separation of the layers (in the example, two layers) constituted by the different mixtures injected (different in color, for example).

Two separate mixtures of EVA (or another polymer with equivalent characteristics) are injected into the molding assembly, conveniently arranged with the female mold part, intermediate insert and male mold part, in order to fill respectively the upper half-image of the manufactured article (the portion formed by the male mold part and by the intermediate insert) and the lower half-image of the manufactured article (the portion formed by the female mold part and by the intermediate insert).

Subsequently, the mold is opened in order to extract the intermediate insert, and then the mold is closed again on the female mold part, making the two mutually complementary half-images, respectively filled by the mass of the separate mixtures of EVA (or other polymer with equivalent characteristics), match up.

This method is used to achieve the result of joining the distinct layers of different mixture (and color) of EVA (or other polymer with equivalent characteristics) in an irreversible manner, while keeping the join line of the different materials sharply divided, well-defined and clearly marked, in order to ensure a good appearance seen from the side of the two-color manufactured article, a required and necessary characteristic for articles targeting the middle and the high end of the market.

However, this result is difficult to achieve because, when the male mold part is closed on the female mold part, the polymeric material is still in the semi-fluid state (and subjected to great pressures and mechanical tensions), and a mixing tends to take place (generally partial and localized) of the two distinct polymeric mixtures, thus obtaining a finished manufactured article that does not present a clear demarcation line between the layers seen from the side, thus giving a different aesthetic result from the one sought.

Numerous molding techniques are known for providing two-color manufactured articles made of material such as EVA and the like, which are intended to solve the previously-indicated technical problems of mixing of the materials that constitute the layers.

Among the known solutions is the one disclosed in EP2520422 (which claims the priority of Italian patent application no. MC2011A000024, granted with no. 1406150 which corresponds to the new national reference code no. 102011901941750) wherein the particular shape structure of the male mold part, of the female mold part and of the intermediate insert are geared to preventing (reducing) the mixing of the materials that constitute the different layers Further related prior art is WO 2010/045144 and EP 3 057 784.

In particular the male mold part and the female mold part comprise respective contoured seats which are connected perimetrically to mirror-symmetrical radial channels, while the intermediate insert comprises, on its mutually opposite faces designed to abut against the male mold part and the female mold part, ridges complementary to at least a portion of the radial channels present on the male mold part and the female mold part, in order to completely block at least a section of them in the assembled configuration of the three components (during the molding the injected mixtures will therefore not be able to access the perimetric radial channels until the intermediate insert is present).

Once the intermediate insert is removed and the male mold part and female mold part are coupled together, the polymeric materials will expand, invading the radial channels and mixing with each other and uncontrollably penetrating into those channels. The manufactured article extracted from the mold will have a protruding perimetric border constituted by material with an irregularly composite structure (i.e. owing to the mixing of the two distinct polymeric materials injected) and, generally, a mixed coloring.

Theoretically, following the removal of the perimetric border, a manufactured article should be obtained on the side edges of which a continuous and regular line of demarcation is defined between the two layers constituted by different material.

In practice, the end result is unfortunately extremely unpredictable, because the diffusion of the mixtures into the radial channels never occurs with the same speed and pressure, and therefore the line of demarcation between the two layers in the finished manufactured article is often irregular and nonlinear. In the majority of manufactured articles that can be produced with this method (and in particular in the soles of shoes) the irregularity explained here is an acute problem, which results in a high percentage of discards among the finished manufactured articles.

The aim of the present invention is to solve the above mentioned drawbacks, by providing a method for molding layered manufactured articles made of polymeric material that ensures to provide manufactured articles in which the line of demarcation between distinct layers is substantially sharp and regular.

Within this aim, an object of the invention is to provide a method for molding layered manufactured articles made of polymeric material that ensures an excellent constancy of the characteristics of the manufactured articles that are progressively produced.

Another object of the invention is to provide a method for molding layered manufactured articles made of polymeric material that ensures a minimization of production discards.

Another object of the invention is to provide a molding kit for providing layered manufactured articles made of polymeric material constituted by components with a simple shape.

Another object of the invention is to provide a molding kit for providing layered manufactured articles made of polymeric material constituted by components shaped so as to avoid the mixing of the different injectable polymeric mixtures.

Another object of the present invention is to provide a method for molding layered manufactured articles made of polymeric material and a corresponding molding kit that are of low cost, easily and practically implemented, and safe in use.

This aim and these and other objects which will become better apparent hereinafter are achieved by a method for molding layered manufactured articles made of polymeric material using a kit constituted by a male mold part, a female mold part, and at least one intermediate insert, wherein at least two distinct polymeric materials are brought to a respective softening temperature, at which point they become viscous and therefore injectable, and, subsequently, they are injected separately, each one into a respective cavity defined between the components of said kit, which consists in:
- heating at least one component of said kit, constituted by a male mold part, a female mold part and at least one intermediate insert, to a temperature higher than said softening temperature of said polymers and corresponding to their cross-linking temperature;
- injecting the heated mixture of a polymeric material into a cavity defined between a pair of components of said kit, filling a perimetric seat of said cavity, said perimetric seat being defined between a perimetric groove of the receptacle present in one of the two components and a proximate flat surface of the other component, which faces it;
- injecting the heated mixture of at least one other polymeric material into at least one further cavity defined between a further pair of components of said kit, filling a respective perimetric seat of said cavity, said perimetric seat being defined between a perimetric groove of the additional receptacle present in one of the two components and a proximate flat surface of the other component, which faces it;
- separating the components of said kit;
- removing at least one intermediate insert;
- mating the remaining components of said kit, making the portion of manufactured article that is present in a receptacle of a first component match up with the additional portion which is present in a corresponding receptacle of a second component, juxtaposing the border part of a first portion of manufactured article, present in the perimetric groove of the receptacle of the respective component, against the border part of a second portion of manufactured article, present in the perimetric groove of the receptacle of the corresponding component;
- keeping said remaining components mated for a predefined cross-linking time;
- separating said remaining components and extracting the manufactured article, including a respective perimetric border;
- removing the perimetric border in order to obtain said manufactured article, now finished.

Such aim and such objects are also achieved by a molding kit for providing layered manufactured articles made of polymeric material, characterized in that it comprises:
- a male mold part provided with a receptacle, which is shaped complementarily to a corresponding portion of the manufactured article to be provided, and which has a first perimetric groove;
- a female mold part provided with a receptacle, which is shaped complementarily to an additional portion of the manufactured article to be provided, and which has a second perimetric groove with a shape and dimensions that are complementary to those of said first perimetric groove for the respective juxtaposition in a mating configuration of the male mold part and of the female mold part;
- at least one intermediate insert, which can be interposed between said male mold part and said female mold part, and which has no protruding parts at the areas which, during the mating with said male mold part and with said female mold part, face and are proximate to said grooves in order to allow the free flow of polymer in said grooves during the corresponding injection into the cavities defined by said kit.

Further characteristics and advantages of the invention will become better apparent from the detailed description that follows of a preferred, but not exclusive, embodiment of the method for molding layered manufactured articles made of polymeric material and of the molding kit for providing layered manufactured articles made of polymeric material, which is illustrated by way of non-limiting example in the accompanying drawings, wherein:

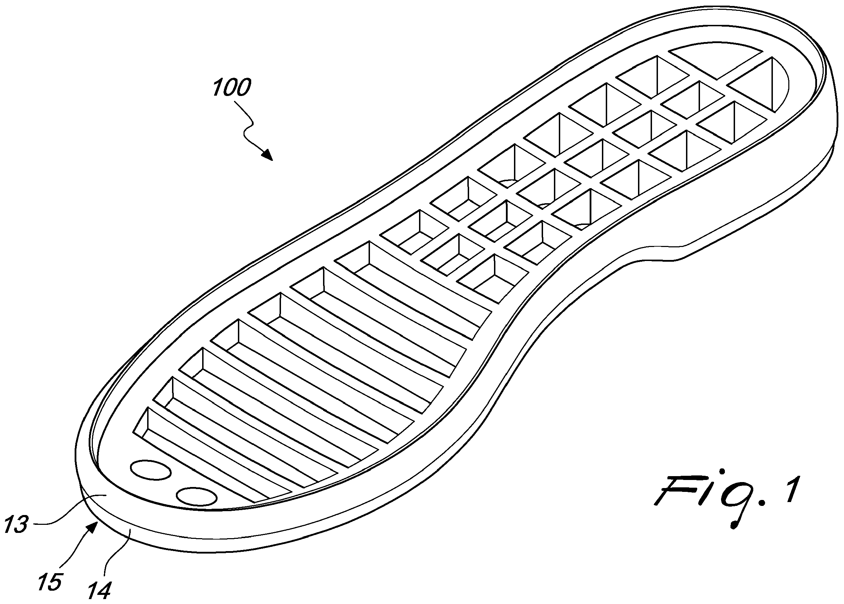

Figure 1 is a schematic perspective view of an embodiment of a stratified manufactured article made of polymeric material according to the invention;

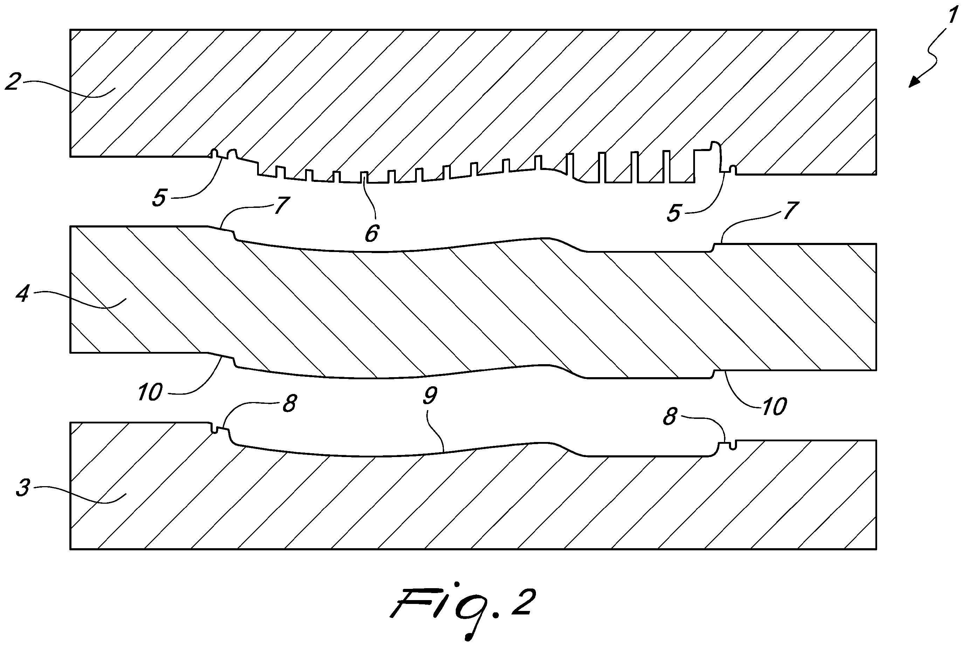

Figure 2 is a schematic side view of a first step of a method for molding layered manufactured articles made of polymeric material;

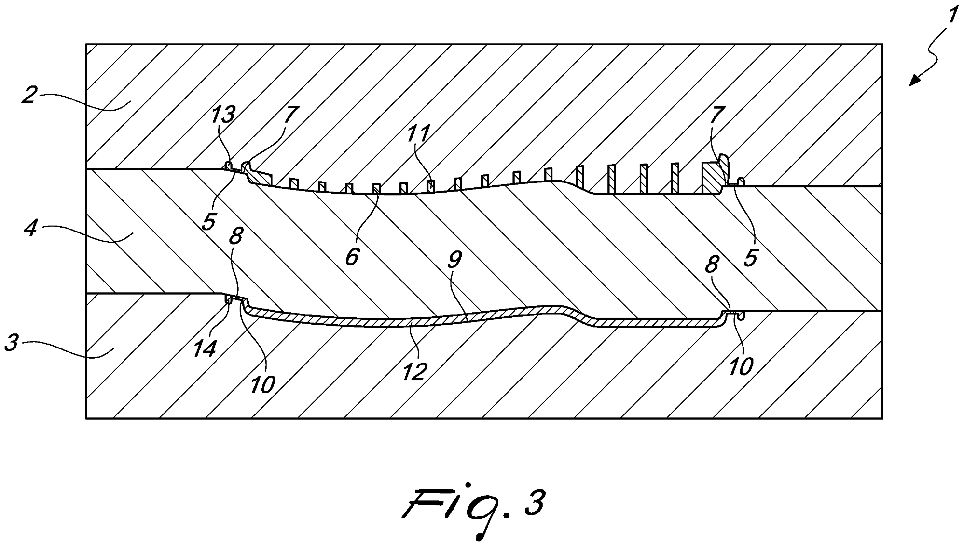

Figure 3 is a schematic side view of a second step of the method according to the invention;

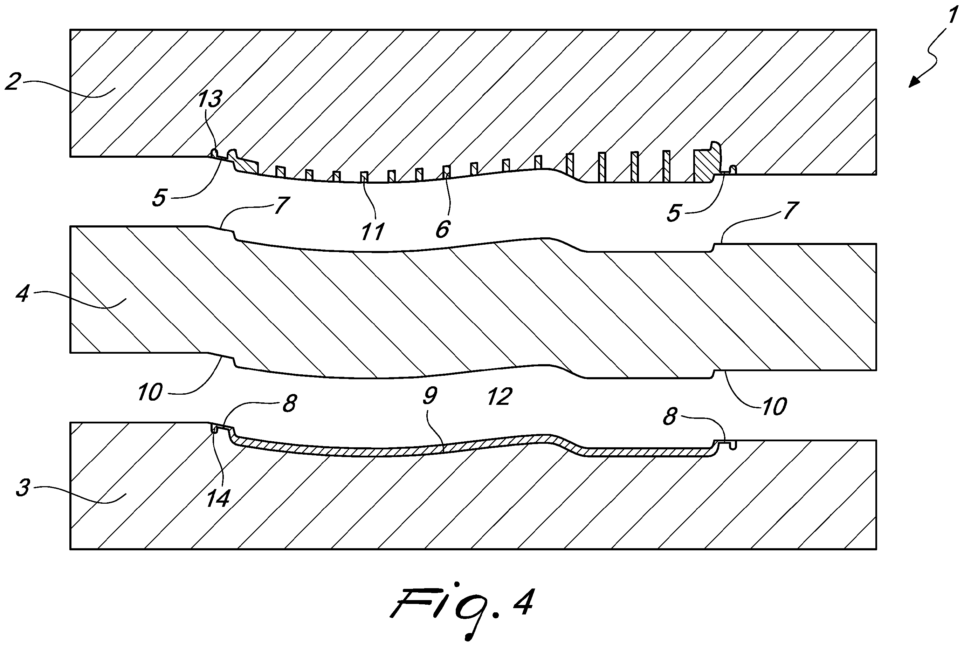

Figure 4 is a schematic side view of a third step of the method according to the invention;

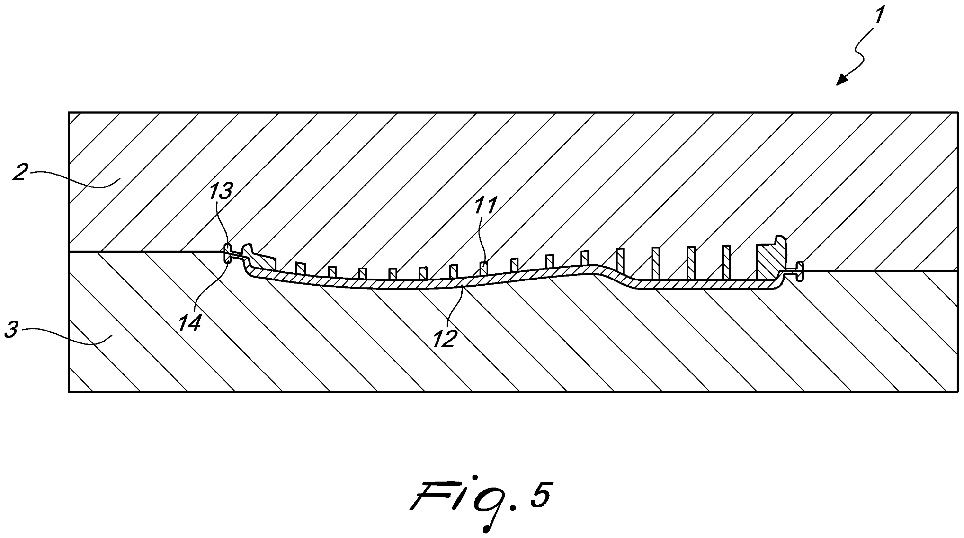

Figure 5 is a schematic side view of a fourth step of the method according to the invention;

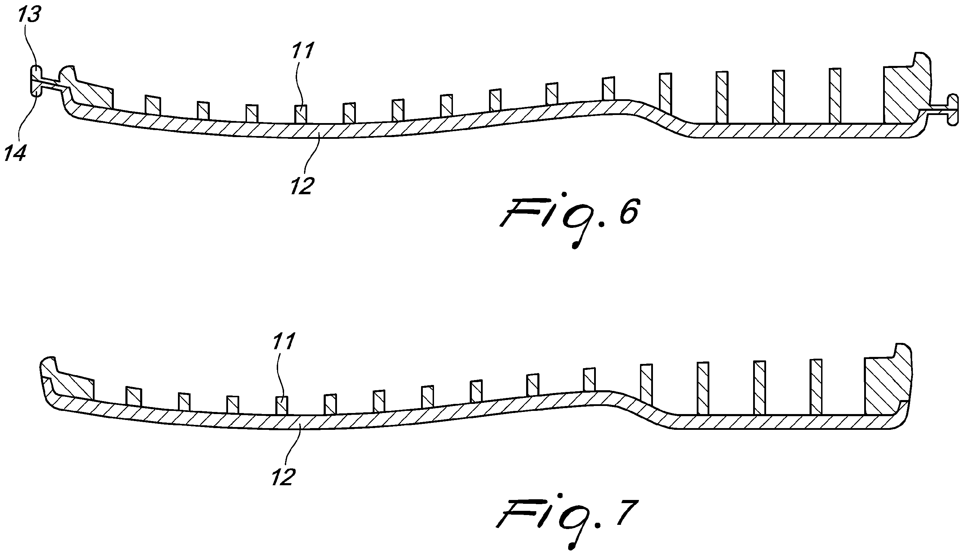

Figure 6 is a schematic side view of the stratified manufactured article of Figure 1 with a continuous perimetric border;
Figure 7 is a schematic side view of the stratified manufactured article of Figure 1;

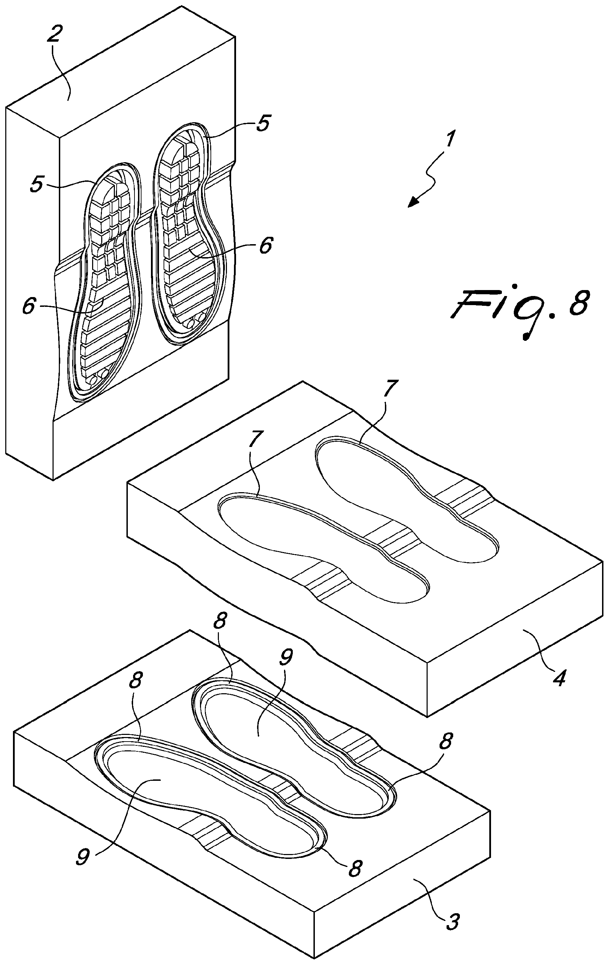

Figure 8 is a schematic perspective view of a possible embodiment of a molding kit according to the invention.

With particular reference to the figures, the reference numeral 1 generally designates a molding kit according to the invention.

The kit 1 according to the invention is constituted by a male mold part 2, a female mold part 3 and at least one intermediate insert 4.

In the method according to the invention, before all other operations, the at least two distinct polymeric materials must be brought to the respective softening temperature, at which they become viscous and therefore injectable.

It should be noted, in particular, that the polymeric materials used can be of the polyolefin type (more specifically expanded polyolefin): purely for the purposes of non-limiting example, it is possible to use ethylene vinyl acetate (EVA) or other materials with similar characteristics, such as for example polystyrene block co-polymers (SEBS, SIS and SBS), flexible polyvinyl chloride (f-PVC), vulcanized thermoplastics (TPV), flexible polyolefins and special cross-linked elastomers.

The adoption is not ruled out of different polymers for providing manufactured articles 10 that need to meet specific requirements.

Generally it is possible to use polymeric mixtures that are differentiated substantially by color, so as to generate a manufactured article 100 with a stratified shape structure in which each layer differs from the other layers present solely by its color. The possibility is not ruled out of using polymeric mixtures that differ from each other by other characteristics (in addition or as an alternative to the color) of chemical or physical type.

The kit 1, once its components are fully assembled to define an assembly for molding the manufactured article 100, internally defines cavities into which it is possible to separately inject the conveniently softened polymeric mixtures, keeping them distinct and separated.

The method of molding according to the invention entails a first step in which it is necessary to heat at least one component of the kit 1 (i.e. the male mold part 2, female mold part 3 and the at least one intermediate insert 4) to a temperature higher than the softening temperature to which the polymers have been brought. In particular the components of the kit 1 will be heated to a temperature corresponding to the cross-linking temperature of the polymers that will subsequently be processed. By corresponding temperature what is meant is a temperature not lower than the cross-linking temperature (i.e. higher than or equal to the minimum temperature that induces the cross-linking of the polymers in use).

In a second step of the method 1 according to the invention, the heated mixture of a polymeric material is injected into a cavity defined between a pair of components of the kit 1, filling a perimetric seat of the cavity.

The perimetric seat of the cavity is defined between a perimetric groove 5 of the receptacle 6 present in one of the two components (in the example, which is shown solely for explanatory and non-limiting purposes and to which the reference numerals given above refer, the component is the male mold part 2) and a proximate flat surface 7 of the other component, which faces it (in the example, which is shown solely for explanatory and non-limiting purposes and to which the reference numerals given above refer, the component is the intermediate insert 4).

Then (or simultaneously with the step illustrated previously) the heated mixture of at least another polymeric material will be injected into at least one additional cavity defined between an additional pair of components of the kit 1, filling a respective perimetric seat of the cavity.

In such case, the perimetric seat will be defined between a perimetric groove 8 of the additional receptacle 9 present in one of the two components (in the example, which is shown solely for explanatory and non-limiting purposes and to which the reference numerals given above refer, the component is the female mold part 3) and a proximate flat surface 10 of the other component, which faces it (in the example, which is shown solely for explanatory and non-limiting purposes and to which the reference numerals given above refer, the component is the intermediate insert 4).

Once the injections of the two heated polymeric mixtures have been carried out, a cross-linking of these will take place inside the respective cavities and perimetric seats.

It should be noted that the portion of polymer that will be accommodated inside each perimetric seat will have a slender thickness (with respect to the remaining part of the manufactured article 100) and therefore will rapidly be heated uniformly by the components of the kit 1 that delimit it.

As illustrated previously, the components of the kit 1 are kept at the cross-linking temperature of the polymeric mixture: the portion of polymer that will be accommodated inside each perimetric seat will therefore proceed with a rapid cross-linking, the effects of which will already be detectable even after a short time of exposure to the temperature of the two components of the kit 1 that delimit that portion.

After a variable time, determined as a function of the characteristics of the polymeric mixture in use, the components of the kit 1 will need to be separated.

Then the at least one intermediate insert 4 will be removed: the parts of the manufactured article 100, (each one) constituted by a single layer that comprises only one polymeric mixture, will remain attached to the male mold part 2 and to the female mold part 3, if the manufactured article 100 is constituted by only two superimposed layers.

If the manufactured article 100 is constituted by a plurality of superimposed layers, then it will be necessary to carry out intermediate operations which will be described below.

The remaining components of the kit 1 will thus be mated, making the portion 11 of manufactured article 100 present in a receptacle 6 of a first component (in the example, which is shown solely for explanatory and non-limiting purposes and to which the reference numerals given above refer, the component is the male mold part 2) match up with the additional portion 12 present in a corresponding receptacle 9 of a second component (in the example, which is shown solely for explanatory and non-limiting purposes and to which the reference numerals given above refer, the component is the female mold part 3), juxtaposing the border part 13 of a first portion 11 of the manufactured article 100 present in the perimetric groove 5 of the receptacle 6 of the respective component (in the example, which is shown solely for explanatory and non-limiting purposes and to which the reference numerals given above refer, the component is the male mold part 2) against the border part 14 of a second portion 12 of the manufactured article 100 present in the perimetric groove 8 of the receptacle 9 of the corresponding component (in the example, which is shown solely for explanatory and non-limiting purposes and to which the reference numerals given above refer, the component is the female mold part 3).

Then it will be necessary to keep the remaining components (in the example shown in the accompanying figures the male mold part 2 and the female mold part 3) mated for a predefined cross-linking time.

During this time interval the entire manufactured article 100 will reach cross-linking (because the components between which it is delimited will be kept at a temperature not lower than the cross-linking temperature of the polymers in use) and the border parts 13 and 14 will be stably coupled but will be visibly separated by a plane of demarcation that is sharp and regular.

The polymeric mixtures that constitute such border parts 13 and 14, in fact, since they had already begun their cross-linking while still in presence of the intermediate insert 4, will not mix with each other, thus ensuring that the line of demarcation between one border part 12 (or 14) and the other 14 (or 13) in the edge of the border 15 is continuous and regular.

Subsequently (i.e. once the cross-linking of the polymers constituting the manufactured article 100 is complete) it will be necessary to separate the remaining components (in the example shown by way of non-limiting example in the accompanying figures, the male mold part 2 and the female mold part 3) and extract the manufactured article 100, including a respective perimetric border 15.

In order to obtain the manufactured article 100, it will thus be necessary to remove the perimetric border 15.

According to an embodiment of undoubted practical and applicative interest, it should be noted that the softening temperature, at which the polymers become viscous and therefore injectable, can positively be comprised between 70° C and 150° C.

It should be noted that, by using ethylene vinyl acetate (EVA) as a polymer for the molding operations, the softening temperature, at which EVA becomes viscous and therefore injectable, will be advantageously comprised between 80°C and 110°C.

With particular reference to operating parameters of proven efficacy, it should further be noted that the temperature at which some of the components of the kit 1 can profitably be heated will be comprised between 120°C and 300°C.

In order to produce a stratified manufactured article 100 that comprises more than two layers, at least two intermediate inserts 4 will be conveniently necessary.

Such inserts 4 will be mutually juxtaposed so as to define at least one respective compartment into which a respective heated polymeric mixture will be injectable.

Each insert 4 can advantageously be mated, with its face arranged opposite to the face that comprises the compartment, with an additional component of the kit 1, so defining a superimposed layering of inserts, which is delimited externally by the male mold part 2 and by the female mold part 3.

In the step of removing the intermediate inserts 4, when a manufactured article 100 is produced with more than two superimposed polymeric layers, successive steps will be taken, removing one insert 4 at a time, in order to allow the mutual coupling of the portions of manufactured article which earlier were separated by such insert 4.

In this manner, by reiterating the operations described previously for each extraction of an insert 4, maintenance will be assured of a sharp plane of demarcation between each layer and the contiguous layer.

It is convenient to note that, between the operation to extract the manufactured article 100 including a respective perimetric border 15 from the kit 1 and the operation to remove the perimetric border 5, there is a step of free expansion/contraction of the manufactured article 100 (which still includes the respective perimetric border 15), and this step will take place at a temperature lower than the softening temperature.

Such step of free expansion/contraction can also occur at ambient temperature, although the possibility is not ruled out of imposing specific environmental conditions if there are requirements imposed by the use of particular polymers or if it is necessary to accelerate the molding operations.

In particular, once the manufactured article 100 has been extracted from the kit 1, its rapid expansion will occur (because the gases released during the cross-linking of the polymers and trapped inside them will be at a high temperature and therefore will tend to assume the maximum volume permitted by the structure of that polymer), and will be followed by a slower contraction, following the cooling of such gases.

In order to prevent the polymer from adhering to the surfaces of the components of the kit 1, it is conveniently possible to apply a film of release substance on these surfaces beforehand.

The deposition of the release substance can be done before each new molding operation or periodically, after a predefined number of moldings.

The present invention extends its protection also to a molding kit 1 for providing layered manufactured articles 100 made of polymeric material.

The kit 1 according to the invention comprises a male mold part 2 provided with a receptacle 6, which is shaped complementarily to a corresponding portion 11 of the manufactured article 100 to be provided and which has a first perimetric groove 5, and a female mold part 3 provided with a receptacle 9, which is shaped complementarily to an additional portion 12 of the manufactured article 100 to be provided and which has a second perimetric groove 8 with a shape and dimensions that are complementary to those of the first perimetric groove 5 for the respective juxtaposition in a mating configuration of the male mold part 2 and of the female mold part 3.

The kit 1 further comprises at least one intermediate insert 4, which can be interposed between the male mold part 2 and the female mold part 3; such insert 4 is advantageously free from protruding parts at the areas (the surfaces 7 and 10) which, during the mating with the male mold part 2 and with the female mold part 3, face and are proximate to the grooves 5 and 8.

The absence of protrusions at the surfaces 7 and 10 positively allows the free flow of softened polymer in the viscous state in the grooves 5 and 8, during the corresponding injection into the cavities defined by the kit 1.

Right from the first injection of the polymers into the cavities, therefore, the polymers will fill the entire cavity available and also the seat defined by the grooves 5 and 8.

If it is desired to make a stratified manufactured article 100 comprising more than two layers, it should be noted that at least two inserts 4 will conveniently be necessary, be mutually juxtaposed and define a compartment into which a respective heated polymeric mixture will advantageously be injectable.

Each insert 4 will be mated, with its face arranged opposite to the face that contributes to defining the compartment, with an additional component of the kit 1, so defining a superimposed layering of inserts 4 which is delimited externally by the male mold part 2 and by the female mold part 3.

In such case the inserts 4 will also comprise peripheral grooves in which the heated polymeric mixture can freely flow, during the injection.

The present invention also relates to a stratified manufactured article 100 made of polymeric material that comprises at least two distinct polymeric layers separated by a substantially well-defined demarcation surface, which is outlined on a respective perimetric edge.

The perimetric edge of the manufactured article 100 according to the invention is defined after the removal of a perimetric border 15 which protrudes radially from that manufactured article 100, at the end of the corresponding molding.

This border 15 is in turn constituted by two polymeric parts that are superimposed and not mixed, and are separated by a substantially well-defined demarcation surface.

It is convenient to note that the kit 1 according to the invention and the method of molding according to the invention introduce a new concept of molding that could be defined "molding with accelerated cross-linking thresholds" which makes it possible (in a decidedly better manner than any conventional technical solution) to obtain an efficient molding of two-color (or multi-color or multi-material) manufactured articles in which the line dividing the colors (or of the materials) is continuous and well-defined.

Around the receptacles 6 and 9 (or other receptacles present, if the embodiment comprising two or more inserts 4 is used for a multilayer manufactured article 100) are the conveniently shaped grooves 5 and 8 (which constitute the accelerated cross-linking thresholds).

Each one of the thresholds (the grooves 5 and 8) is made of width such that the conduction of heat transferred per unit of time between the part of the component of the kit 1 and the masses of the two distinct polymers injected is the maximum. This will enable a considerable acceleration of the cross-linking of the polymers that flow in these thresholds (in the grooves 5 and 8); it is to be noted in fact that the exchange of heat between two bodies is directly proportional to the area of the contact surface through which this conducting of heat occurs. Furthermore, these two thresholds (the grooves 5 and 8) are slightly lowered with respect to the closing surface corresponding to the corresponding side of the intermediate insert 4. The space created between each component of the kit 1 and the respective intermediate insert 4 must be as thin as possible: a calibrated interspace will allow the flow of the softened polymer (in the viscous state) but simultaneously ensure that the volume of material to be heated is the minimum, so that it requires a minimum quantity of heat for the cross-linking.

The accelerated cross-linking thresholds (the grooves 5 and 8) thus provided make it possible for the polymer flowing in them to cross-link (solidify) much sooner than in the other parts of the cavity (for example in the other parts of the receptacle 6 and of the receptacle 9).

In this way border parts 13 and 14 will be formed which are high density and cross-linked in shorter times and which will ensure perfect control of the line of demarcation between the layers of polymer of different colors and the precise definition of their connecting portion.

This will happen because the volume of material that is to be cross-linked in the thresholds (the grooves 5 and 8) is minimal, and because in the interspaces created between the thresholds (the grooves 5 and 8) and the corresponding surfaces 7 and 10 of the intermediate insert 4 there will be a greater exchange of heat per unit of time (high value of the ratio between contact surface and mass of material).

The present invention therefore ensures the formation of a perimetric border 15 constituted by two border parts 13 and 14, which are superimposed and joined, around the perimeter of the manufactured article 100: these border parts 13 and 14 cross-link (solidify) in appreciably shorter times than the rest of the corresponding materials injected into and flowing in the parts of the receptacles 6 and 9 where the thickness and the volume are necessarily greater. It is for this reason that the cross-linking of the polymers in the other parts of the receptacles 6 and 9 will proceed much more slowly.

The process of cross-linking of the polymers will be longer, in terms of time, at the center of the receptacles 6 and 9, which will define the actual shape of the manufactured article 100, than at the perimetric border parts 13 and 14. At their most radial part, the grooves 5 and 8 will have an incision which is designed to ensure that the border parts 13 and 14 remain in adherence to the corresponding component of the kit 1 during the step of removing the intermediate insert 4.

The border parts 13 and 14 furthermore have a greater density than the respective materials that flowed elsewhere in the receptacles 6 and 9, because the cross-linking of the polymeric materials that constitute them has been accelerated and this will determine a lower localization of gases trapped in the material.

Advantageously the present invention solves the above mentioned problems, by providing a method for molding layered manufactured articles 100 made of polymeric material that ensures manufactured articles 100 are provided in which the line of demarcation between distinct layers is substantially sharp and regular.

Conveniently the method according to the invention ensures an excellent constancy of the characteristics of the manufactured articles 100 that are progressively produced.

Profitably the method according to the invention ensures a minimization of production waste.

Positively the molding kit 1 for providing layered manufactured articles 100 made of polymeric material according to the invention is constituted by components with a simple shape (which therefore have low production costs and are less prone to damage during use).

Advantageously the kit 1 according to the invention is constituted by components shaped so as to avoid the mixing of the different injectable polymeric mixtures.

Positively the method according to the invention and the corresponding kit 1 are easily and practically implemented and of low cost: such characteristics render the method and the kit according to the invention innovations that are certain to be safe in use.

The invention, thus conceived, is susceptible of numerous modifications and variations, all of which are within the scope of the appended claims. Moreover, all the details may be substituted by other, technically equivalent elements.

In the exemplary embodiments illustrated, individual characteristics shown in relation to specific examples may in reality be interchanged with other, different characteristics, existing in other exemplary embodiments.

In practice, the materials employed, as well as the dimensions, may be any according to requirements and to the state of the art.

This application claims priority of Italian Application No. 10 2020 0002 1172.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for molding layered manufactured articles (100) made of polymeric material using a kit (1) constituted by a male mold part (2), a female mold part (3), and at least one intermediate insert (4), wherein at least two distinct polymeric materials are brought to a respective softening temperature, at which point they become viscous and therefore injectable, and, subsequently, they are injected separately, each one into a respective cavity defined between the components of said kit (1), which consists in:
- heating at least one component of said_kit (1), constituted by a male mold part (2), a female mold part (3) and at least one intermediate insert (4), to a temperature higher than said softening temperature of said polymers and corresponding to their cross-linking temperature;
- injecting the heated mixture of a polymeric material into a cavity defined between a pair of components of said kit (1), filling a perimetric seat of said cavity, said perimetric seat being defined between a perimetric groove (5) of the receptacle (6) present in one of the two components and a proximate flat surface (7) of the other component, which faces it;
- injecting the heated mixture of at least one other polymeric material into at least one further cavity defined between a further pair of components of said kit (1), filling a respective perimetric seat of said cavity, said perimetric seat being defined between a perimetric groove (8) of the additional receptacle (9) present in one of the two components and a proximate flat surface (10) of the other component, which faces it;
- separating the components of said kit (1);
- removing at least one intermediate insert (4);
- mating the remaining components of said kit (1), making the portion (11) of manufactured article (100) that is present in a receptacle (6) of a first component match up with the additional portion (12) which is present in a corresponding receptacle (9) of a second component, juxtaposing the border part (13) of a first portion of manufactured article (11), present in the perimetric groove (7) of the receptacle (6) of the respective component, against the border part (14) of a second portion of manufactured article (12), present in the perimetric groove (8) of the receptacle (9) of the corresponding component;
- keeping said remaining components mated for a predefined cross-linking time;
- separating said remaining components and extracting the manufactured article (100), including a respective perimetric border (15);
- removing the perimetric border (15) in order to obtain said manufactured article (100), now finished.

2. The method according to claim 1, **characterized in that** said softening temperature, at which said polymers become viscous and therefore injectable, is comprised between 70°C and 150°C.

3. The method according to claim 2, **characterized in that**, by using ethylene vinyl acetate (EVA) as a polymer for the molding operations, said softening temperature at which EVA becomes viscous and therefore injectable is comprised between 80°C and 110°C.

4. The method according to claim 1, **characterized in that** said temperature to which said components of said kit (1) are heated is comprised between 120°C and 300°C.

5. The method according to claim 1, **characterized in that** said inserts (4) are at least two, are mutually juxtaposed and define a compartment into which a respective heated polymeric mixture can be injected, each said insert (4) being mated, with its face that is opposite with respect to said compartment, with an additional component of said kit (1), thus defining a superimposed layering of inserts which is delimited externally by said male mold part (2) and said female mold part (3).

6. The method according to claim 1, **characterized in that** between said operation to extract the manufactured article (100), including a respective perimetric border (15), from the kit (1) and said operation to remove said perimetric border (15) there is a step of free expansion/contraction of said article (100), including a respective perimetric border (15), at a temperature lower than the softening temperature.

7. The method according to one or more of the preceding claims, **characterized in that** a film of release substance is deposited beforehand on the surfaces of said components of said kit (1) in order to prevent the adhesion of the polymer to said surfaces.

8. A molding kit for providing layered manufactured articles (100) made of polymeric material, **characterized in that** it comprises:
- a male mold part (2) provided with a receptacle (6), which is shaped complementarily to a corresponding portion (11) of the manufactured article (100) to be provided, and which has a first perimetric groove (5);
- a female mold part (3) provided with a receptacle (9), which is shaped complementarily to an additional portion (12) of the manufactured article (100) to be provided, and which has a second perimetric groove (8) with a shape and dimensions that are complementary to those of said first perimetric groove (5) for the respective juxtaposition in a mating configuration of the male mold part (2) and of the female mold part (3);
- at least one intermediate insert (4), which can be interposed between said male mold part (2) and said female mold part (3), and which has no protruding parts at the areas which, during the mating with said male mold part (2) and with said female mold part (3), face and are proximate to said grooves (5, 8) in order to allow the free flow of polymer in said grooves (5, 8) during the corresponding injection into the cavities defined by said kit (1).

9. The molding kit according to claim 8, **characterized in that** said inserts (4) are at least two, are mutually juxtaposed and define a compartment into which a respective heated polymeric mixture can be injected, each said insert (4) being mated, with its face that is opposite with respect to said compartment, with an additional component of said kit (1), thus defining a superimposed layering of inserts (4) which is delimited externally by said male mold part (2) and said female mold part (3).

10. A stratified manufactured article made of polymeric material, **characterized in that** it comprises at least two distinct polymeric layers separated by a substantially well-defined demarcation surface, which is outlined on a respective perimetric edge which is defined after the removal of a perimetric border (15) that protrudes radially from said article (100) at the end of the corresponding molding, said border (15) being constituted by two polymeric parts that are superimposed and not mixed and are separated by a substantially well-defined demarcation surface.

## Patentansprüche

1. Ein Verfahren zum Formen geschichteter Fertigartikel (100) aus Polymermaterial unter Verwendung eines Formsatzes (1), der aus einem Patrizenteil (2), einem Matrizenteil (3) und mindestens einem intermediären Einsatz (4) besteht, wobei mindestens zwei separate Polymermaterialien auf eine entsprechende Erweichungstemperatur gebracht werden, bei der sie zähflüssig und somit einspritzbar werden und anschließend separat eingespritzt werden, jedes in einen entsprechenden Hohlraum, der zwischen den Komponenten des Formsatzes (1) bestimmt ist; bestehend aus:
- dem Erhitzen mindestens einer Komponente des Formsatzes (1), der aus einem Patrizenteil (2), einem Matrizenteil (3) und mindestens einem intermediären Einsatz (4) besteht, auf eine Temperatur, die höher ist als die Erweichungstemperatur der Polymere und ihrer Quervernetzungstemperatur entspricht;
- dem Einspritzen der erhitzten Mischung eines Polymermaterials in einen Hohlraum, der zwischen einem Paar von Bestandteilen des Formsatzes (1) bestimmt ist, wodurch ein perimetrischer Sitz des Hohlraums gefüllt wird, wobei der perimetrische Sitz zwischen einer Umfangsnut (5) der Vertiefung (6), die in einer der zwei Komponenten vorhanden ist, und einer angrenzenden flachen Oberfläche (7) der anderen Komponente, die ihr zugewandt ist, bestimmt ist;
- dem Einspritzen der erhitzten Mischung mindestens eines anderen Polymermaterials in mindestens einen weiteren Hohlraum, der zwischen einem weiteren Paar von Komponenten des Formsatzes (1) bestimmt ist, wodurch ein entsprechender perimetrischer Sitz des Hohlraums gefüllt wird, wobei der perimetrische Sitz zwischen einer Umfangsnut (8) der weiteren Vertiefung (9), die in einer der zwei Komponenten vorhanden ist, und einer angrenzenden flachen Oberfläche (10) der anderen Komponente, die ihr zugewandt ist, bestimmt ist;
- dem Trennen der Komponenten des Formsatzes (1);
- dem Entfernen mindestens eines intermediären Einsatzes (4);
- dem Zusammensetzen der übrigen Komponenten des Formsatzes (1), wobei der Teil (11) des Fertigartikels (100), der in einer Vertiefung (6) einer ersten Komponente vorhanden ist, mit dem zusätzlichen Teil (12) zusammengefügt wird, der in einer entsprechenden Vertiefung (9) einer zweiten Komponente vorhanden ist, wobei der Randabschnitt (13) eines ersten Teils des Fertigartikels (11), der sich in der Umfangsnut (7) der Vertiefung (6) der jeweiligen Komponente befindet, neben den Randabschnitt (14) eines zweiten Teils des Fertigartikels (12) gelegt wird, der sich in der Umfangsnut (8) der Vertiefung (9) der entsprechenden Komponente befindet;
- dem Halten der restlichen Komponenten in zusammengesetztem Zustand für eine vordefinierte Quervernetzungszeit;
- dem Trennen der restlichen Komponenten und dem Herausnehmen des Fertigartikels (100), der einen jeweiligen Umfangsrand (15) einschließt;
- dem Herausnehmen des Umfangsrandes (15), um den nun fertig gestellten Fertigartikel (100) zu erhalten.

2. Das Verfahren gemäß Anspruch 1, **dadurch gekennzeichnet, dass** die Erweichungstemperatur, bei der die Polymere zähflüssig und somit einspritzbar werden, zwischen 70°C und 150°C liegt.

3. Das Verfahren gemäß Anspruch 2, **dadurch gekennzeichnet, dass**, indem Ethylenvinylacetat (EVA) als Polymer für die Formvorgänge verwendet wird, die Erweichungstemperatur, bei der EVA zähflüssig und somit einspritzbar wird, zwischen 80°C und 110°C liegt.

4. Das Verfahren gemäß Anspruch 1, **dadurch gekennzeichnet, dass** die Temperatur, auf welche die Komponenten des Formsatzes (1) erhitzt werden, zwischen 120°C und 300°C liegt.

5. Das Verfahren gemäß Anspruch 1, **dadurch gekennzeichnet, dass** die Einsätze (4) mindestens zwei an der Zahl sind, nebeneinander liegen und einen Raum bestimmen, in den eine entsprechende erhitzte Polymermischung eingespritzt werden kann, wobei jeder Einsatz (4) mit der Seite, die dem Raum gegenüberliegt, mit einer weiteren Komponente des Formsatzes (1) zusammengefügt wird und so eine übereinander gelegte Schichtung von Einsätzen bestimmt, die außen von dem Patrizenteil (2) und dem Matrizenteil (3) begrenzt ist.

6. Das Verfahren gemäß Anspruch 1, **dadurch gekennzeichnet, dass** zwischen dem Vorgang des Herausnehmens des Fertigartikels (100), der einen entsprechenden Umfangsrand (15) einschließt, aus dem Formsatz (1) und dem Vorgang des Entnehmens des Umfangsrandes (15) ein Schritt der freien Expansion/Kontraktion des Artikels (100), der einen entsprechenden Umfangsrand (15) einschließt, bei einer Temperatur liegt, die niedriger ist als die Erweichungstemperatur.

7. Das Verfahren gemäß einem oder mehreren der obigen Ansprüche, **dadurch gekennzeichnet, dass** ein Film aus einem Formtrennmittel im Voraus auf die Oberflächen der Komponenten des Formsatzes (1) aufgetragen wird, um die Haftung des Polymers an den Oberflächen zu verhindern.

8. Ein Formsatz zum Herstellen geschichteter Fertigartikel (100) aus polymerem Material, **dadurch gekennzeichnet, dass** er Folgendes umfasst:
- einen Patrizenteil (2), ausgestattet mit einer Vertiefung (6), die komplementär zu einem entsprechenden Abschnitt (11) des herzustellenden Fertigartikels (100) geformt ist und eine erste Umfangsnut (5) hat;
- einen Matrizenteil (3), ausgestattet mit einer Vertiefung (9), die komplementär zu einem weiteren Abschnitt (12) des herzustellenden Fertigartikels (100) geformt ist und eine zweite Umfangsnut (8) mit einer Form und Abmessungen hat, die komplementär zu denjenigen der ersten Umfangsnut (5) sind, zur entsprechenden Anordnung des Patrizenteils (2) und des Matrizenteils (3) nebeneinander in einer zusammenpassenden Konfiguration;
- mindestens einen intermediären Einsatz (4), der zwischen dem Patrizenteil (2) und dem Matrizenteil (3) angeordnet werden kann und der keine vorstehenden Teile in den Bereichen hat, die beim Zusammenfügen mit dem Patrizenteil (2) und mit dem Matrizenteil (3) den Nuten (5, 8) zugewandt sind und an sie angrenzen, um während des entsprechenden Einspritzvorgangs in die von dem Formsatz (1) bestimmten Hohlräume das freie Fließen von Polymer in den Nuten (5, 8) zu ermöglichen.

9. Der Formsatz gemäß Anspruch 8, **dadurch gekennzeichnet, dass** die Einsätze (4) mindestens zwei an der Zahl sind, nebeneinander liegen und einen Raum bestimmen, in welchen eine entsprechende erhitzte Polymermischung eingespritzt werden kann; wobei jeder Einsatz (4) mit der Seite, die dem Raum gegenüberliegt, mit einer weiteren Komponente des Formsatzes (1) zusammengefügt wird und so eine übereinander gelegte Schichtung von Einsätzen (4) bestimmt, die außen von dem Patrizenteil (2) und dem Matrizenteil (3) begrenzt ist.

10. Ein geschichteter Fertigartikel aus Polymermaterial, **dadurch gekennzeichnet, dass** er mindestens zwei separate Polymerschichten umfasst, getrennt durch eine im Wesentlichen genau definierte Begrenzungsoberfläche, die auf einer jeweiligen Umfangskante umrissen ist, welche nach der Entnahme eines Umfangsrandes (15) definiert ist, der am Ende des entsprechenden Formvorgangs radial von dem Artikel (100) vorsteht; wobei der Rand (15) aus zwei Polymerteilen besteht, die übereinander liegen und sich nicht mischen und durch eine im Wesentlichen genau definierte Begrenzungsoberfläche getrennt sind.

## Revendications

1. Procédé pour mouler des articles manufacturés (100) structurés en couches de matière polymère, en utilisant un kit (1) constitué d'une partie de moule mâle (2), d'une partie de moule femelle (3) et d'au moins un insert intermédiaire (4), dans lequel au moins deux matières polymères distinctes sont amenées jusqu'à une température de ramollissement respective, point auquel elles deviennent visqueuses et donc injectables, et, ensuite, elles sont injectées séparément, chacune dans une cavité respective définie entre les composants dudit kit (1), qui consiste à :
- chauffer au moins un composant dudit kit (1), constitué d'une partie de moule mâle (2), d'une partie de moule femelle (3) et d'au moins un insert intermédiaire (4), jusqu'à une température supérieure à ladite température de ramollissement desdits polymères et correspondant à leur température de réticulation,
- injecter le mélange chauffé d'une matière polymère dans une cavité définie entre une paire de composants dudit kit (1), remplir un siège périmétrique de ladite cavité, ledit siège périmétrique étant défini entre une rainure périmétrique (5) du logement (6) présent dans l'un des deux composants et une surface plane proche (7) de l'autre composant, qui lui fait face,
- injecter le mélange chauffé d'au moins une autre matière polymère dans au moins une cavité supplémentaire définie entre une paire supplémentaire de composants dudit kit (1), remplir un siège périmétrique respectif de ladite cavité, ledit siège périmétrique étant défini entre une rainure périmétrique (8) du logement supplémentaire (9) présent dans l'un des deux composants et une surface plane proche (10) de l'autre composant, qui lui fait face,
- séparer les composants dudit kit (1),
- retirer au moins un insert intermédiaire (4),
- apparier les composants restants dudit kit (1), faire correspondre la portion (11) de l'article manufacturé (100) qui est présente dans un logement (6) d'un premier composant avec la portion supplémentaire (12) qui est présente dans un logement (9) correspondant d'un second composant, juxtaposer la partie de bordure (13) d'une première portion d'article manufacturé (11), présente dans la rainure périmétrique (7) du logement (6) du composant respectif, contre la partie de bordure (14) d'une seconde portion d'article manufacturé (12), présente dans la rainure périmétrique (8) du logement (9) du composant correspondant,
- garder lesdits composants restants appariés pendant un temps de réticulation prédéfini,
- séparer lesdits composants restants et extraire l'article manufacturé (100), incluant une bordure périmétrique (15) respective,
- retirer la bordure périmétrique (15) afin d'obtenir ledit article manufacturé (100), désormais fini.

2. Procédé selon la revendication 1, **caractérisé en ce que** ladite température de ramollissement, à laquelle lesdits polymères deviennent visqueux et donc injectables, est comprise entre 70 °C et 150 °C.

3. Procédé selon la revendication 2, **caractérisé en ce que**, en utilisant de l'éthylène-acétate de vinyle (EVA) comme polymère pour les opérations de moulage, ladite température de ramollissement à laquelle l'EVA devient visqueux et donc injectable est comprise entre 80 °C et 110 °C.

4. Procédé selon la revendication 1, **caractérisé en ce que** ladite température à laquelle lesdits composants dudit kit (1) sont chauffés est comprise entre 120 °C et 300 °C.

5. Procédé selon la revendication 1, **caractérisé en ce que** lesdits inserts (4) sont au moins au nombre de deux, sont mutuellement juxtaposés et définissent un compartiment dans lequel un mélange polymère chauffé respectif peut être injecté, chaque dit insert (4) étant apparié, avec sa face qui est opposée par rapport audit compartiment, avec un composant supplémentaire dudit kit (1), en définissant ainsi une superposition de couches d'inserts qui est délimitée extérieurement par ladite partie de moule mâle (2) et ladite partie de moule femelle (3).

6. Procédé selon la revendication 1, **caractérisé en ce qu'**entre ladite opération pour extraire l'article manufacturé (100), incluant une bordure périmétrique (15) respective, du kit (1) et ladite opération pour retirer ladite bordure périmétrique (15), il y a une étape d'expansion/contraction libre dudit article (100), incluant une bordure périmétrique (15) respective, à une température inférieure à la température de ramollissement.

7. Procédé selon une ou plusieurs des revendications précédentes, **caractérisé en ce qu'**un film de substance de démoulage est déposé au préalable sur les surfaces desdits composants dudit kit (1) afin d'empêcher l'adhérence du polymère auxdites surfaces.

8. Kit de moulage pour fournir des articles manufacturés (100) structurés en couches de matière polymère, **caractérisé en ce qu'**il comporte :
- une partie de moule mâle (2) pourvue d'un logement (6), qui est formée de manière complémentaire à une portion (11) correspondante de l'article manufacturé (100) à fournir, et qui a une première rainure périmétrique (5),
- une partie de moule femelle (3) pourvue d'un logement (9), qui est formée de manière complémentaire à une portion supplémentaire (12) de l'article manufacturé (100) à fournir, et qui a une seconde rainure périmétrique (8) avec une forme et des dimensions qui sont complémentaires de celles de ladite première rainure périmétrique (5) pour la juxtaposition respective dans une coopération d'appariement de la partie de moule mâle (2) et de la partie de moule femelle (3),
- au moins un insert intermédiaire (4), qui peut être intercalé entre ladite partie de moule mâle (3) et ladite partie de moule femelle (3), et qui n'a aucune partie saillante au niveau des zones qui, pendant l'appariement avec ladite partie de moule mâle (2) et avec ladite partie de moule femelle (3), se font face et sont près desdites rainures (5, 8) afin de permettre le libre écoulement du polymère dans lesdites rainures (5, 8) pendant l'injection correspondante dans les cavités définies par ledit kit (1).

9. Kit de moulage selon la revendication 8, **caractérisé en ce que** lesdits inserts (4) sont au moins au nombre de deux, sont mutuellement juxtaposés et définissent un compartiment dans lequel un mélange polymère chauffé respectif peut être injecté, chaque dit insert (4) étant apparié, avec sa face qui est opposée par rapport audit compartiment, avec un composant supplémentaire dudit kit (1), en définissant ainsi une superposition de couches d'inserts (4) qui est délimitée extérieurement par ladite partie de moule mâle (2) et ladite partie de moule femelle (3).

10. Article manufacturé stratifié en matière polymère, caractérisé ce qu'il comporte au moins deux couches polymères distinctes séparées par une surface de démarcation sensiblement bien définie, qui est délimitée sur un bord périmétrique respectif qui est défini après le retrait d'une bordure périmétrique (15) qui fait radialement saillie à partir dudit article (100) à la fin du moulage correspondant, ladite bordure (15) étant constituée de deux parties polymères qui sont superposées et non mélangées et sont séparées par une surface de démarcation sensiblement bien définie.
